(19) Europäisches Patentamt
European Patent Office
Office européen des brevets

(11) **EP 2 267 418 B1**

(12) **EUROPÄISCHE PATENTSCHRIFT**

(45) Veröffentlichungstag und Bekanntmachung des Hinweises auf die Patenterteilung:
**03.04.2019 Patentblatt 2019/14**

(51) Int Cl.:
**G01F 1/84** (2006.01)        **G01F 15/02** (2006.01)
**G01F 25/00** (2006.01)

(21) Anmeldenummer: **10006538.2**

(22) Anmeldetag: **23.06.2010**

(54) **Verfahren zum Einrichten und Betreiben eines Massedurchflussmessgeräts und Massedurchflussmessgerät unter Berücksichtigung von Temperatureinflussfaktoren**

Method for setting up and operating a mass flow measuring device and mass flow measuring device taking account of temperature influences

Procédé d'installation et de fonctionnement d'un appareil de mesure du débit massique et appareil de mesure du débit massique tenant compte de variabilités avec la température

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **26.06.2009 DE 102009030903**

(43) Veröffentlichungstag der Anmeldung:
**29.12.2010 Patentblatt 2010/52**

(73) Patentinhaber: **Krohne AG**
**4019 Basel (CH)**

(72) Erfinder:
• **Wang, Tao**
**Canterbury CT2 8 HP (GB)**
• **Hussain, Yousif**
**Weston, Faell**
**Northampton (GB)**

(74) Vertreter: **Gesthuysen Patent- und Rechtsanwälte**
**Patentanwälte**
**Postfach 10 13 54**
**45013 Essen (DE)**

(56) Entgegenhaltungen:
**EP-A2- 0 578 113        WO-A1-2008/039203**
**DE-A1- 19 537 880**

• **A Trigas: "RECOMMENDED PRACTICES FOR FLOWMETER USE AND CALIBRATION", , 1 December 2008 (2008-12-01), XP055199686, Retrieved from the Internet: URL:http://www.trigasfi.de/pdf/CalFreqpape rEnglish.pdf [retrieved on 2015-07-02]**

**Beschreibung**

Die Erfindung betrifft ein Verfahren gemäß dem Oberbegriff von Patentanspruch 1.

Nach dem Coriolis-Prinzip arbeitende Massedurchflussmessgeräte sind seit langem bekannt und haben in ganz unterschiedlichen Bereichen der Technik, insbesondere in der industriellen Prozessmesstechnik, einen weit verbreiteten Einsatz gefunden. Konstruktiv sind Massedurchflussmessgeräte nach dem Coriolis-Prinzip unterschiedlich ausgestaltet, sie können aus einem einzelnen oder aus mehreren, geraden oder gekrümmten Rohr bzw. Rohren bestehen, was im Zusammenhang mit der vorliegende Lehre jedoch nicht von Bedeutung ist. Wenn im Folgenden von einem Massedurchflussmessgeräte mit "einem" Messrohr die Rede ist, so ist dies nicht einschränkend zu verstehen, vielmehr lässt sich die damit verbundene Lehre ohne weiteres auch auf Massedurchflussmessgeräte mit mehreren Messrohren übertragen.

Unabhängig von ihrer konkreten Ausgestaltung ist den auf dem Coriolis-Prinzip beruhenden Massedurchflussmessgeräten gemeinsam, dass ihr Messrohr von einem - meist zentral angeordneten - Schwingungserzeuger zu einer Schwingung angeregt wird. Im undurchströmten Zustand des Messrohres schwingt das Messrohr symmetrisch um die Anregungsstelle. In Abhängigkeit von der Strömung eines Mediums durch das Messrohr - und damit in Abhängigkeit von dem Massedurchfluss des Mediums durch das Messrohr - verändert sich die Form der Schwingung beidseitig der Anregungsstelle, wird also, wenn vorher Symmetrie vorgelegen hat, asymmetrisch. Die beidseitig der Anregungsstelle von Messwertaufnehmern erfassten Schwingungsanteile sind phasenverschoben, wobei die Phasenverschiebung proportional dem tatsächlichen Massedurchfluss ist. Die Phasenverschiebung der beidseitig der Anregungsstelle erfassten Schwingungen entspricht naturgemäß einer Zeitdifferenz, nämlich beispielsweise der Zeitdifferenz zwischen dem Nulldurchgang der Schwingung des Messrohres auf der einen Seite der Anregungsstelle und dem Nulldurchgang der Schwingung des Messrohres auf der anderen Seite der Anregungsstelle des Messrohres.

Abgesehen von dem generellen Wunsch, ein Messgerät hinsichtlich seiner Genauigkeit zu verbessern, werden an Massedurchflussmessgeräte in bestimmten Anwendungsfällen besonders hohe Genauigkeitsanforderungen gestellt, z. B. in eichpflichtigen Einsatzbereichen, die eichfähige Coriolis-Massedurchflussmessgeräte erfordern; dies ist beispielsweise bei der überwachten Verteilung strömungsfähiger Medien - Custody Transfer - der Fall. Die geforderten Genauigkeiten können hier im Promille-Bereich liegen.

Massedurchflussmessgeräte - auch nicht eichfähige - werden üblicherweise werkseitig kalibriert, also in einem Prüfstand mit einem definierten Massedurchsatz beaufschlagt, wobei aus dem von dem Massedurchflussmessgerät ermittelten Massedurchfluss und dem mit hoher Genauigkeit vorgegebenem tatsächlichen Massedurchfluss beispielsweise ein Kalibrierfaktor berechnet wird, der innerhalb einer Rechenvorschrift Berücksichtigung findet, wobei die Rechenvorschrift die als Messgröße vorliegende Zeitdifferenz mit Hilfe des Kalibrierfaktors in einen korrespondierenden Wert für den Massedurchfluss überträgt. Eine solche Rechenvorschrift sieht dann wie folgt aus:

$$\dot{m} = K_R t_d \ .\qquad\qquad (1)$$

Die Kalibrierung der Massedurchflussmessgeräte erfolgt dabei üblicherweise bei einer festen, wohldefinierten Temperatur, nämlich der Referenztemperatur, die nahe zu erwartenden Einsatztemperaturen liegt, beispielsweise bei 20°C liegen kann.

Die Erfahrung zeigt, dass die Genauigkeit des Messergebnisses bei einer von der Referenztemperatur abweichenden Betriebstemperatur des Coriolis-Massedurchflussmessgeräts schlechter werden kann, unter Umständen auch den noch akzeptierten Genauigkeitsbereich verlässt. Um die Messgenauigkeit trotz einer von der Referenztemperatur abweichenden Betriebstemperatur zu erhalten, ist aus dem Stand der Technik bekannt, die Temperatur T des Messrohres zu ermitteln und ganz speziell die Abhängigkeit des Elastizitätsmoduls E des Materials des Messrohrs von der Temperatur des Messrohres im Rahmen der Rechenvorschrift zu berücksichtigen. Dies ist darin begründet, dass die Schwingeigenschaften des Coriolis-Messrohrs erheblich von dem Elastizitätsmodul E des Materials des Messrohrs abhängen und sich daher eine Temperaturabhängigkeit des Elastizitätsmoduls sofort als Temperaturabhängigkeit der Schwingeigenschaft des Messrohrs auswirkt. Dieser Zusammenhang ist bekannt und beispielsweise anhand der Formulierung gemäß Gleichung 2 ersichtlich:

$$\dot{m} = \frac{C \cdot E I_p}{\psi(\frac{x_l}{l}) l^3} t_d \qquad .\qquad\qquad (2)$$

In Gleichung (2) ist

C eine Konstante,

E das Elastizitätsmodul des Materials des Messrohrs,

$I_p$ das Flächenträgheitsmoment des Messohrs , $I_p = \frac{\pi}{64}(D^4 - d^4)$ wobei D der Außendurchmesser und d der Innendurchmesser des Messrohrs ist,

$\psi$ die Durchbiegung des Messrohrs, wobei die Durchbiegung des Rohres an der Stelle des Sensors $\frac{x_l}{l}$ von Interesse ist.

Es hat sich herausgestellt, dass auch eine Kompensation bzw. eine Berücksichtigung der Temperaturabhängigkeit des Elastizitätsmoduls des Messrohrs bei großen Temperaturschwankungen zu keinem ausreichenden Ergebnis hinsichtlich der Messgenauigkeit führt. Davon sind insbesondere - nicht aber ausschließlich - Anwendungen von Massedurchflussmessgeräten betroffen, bei denen extrem kalte Medien (z. B. flüssiger Stickstoff, Siedepunkt: -195,80°C) oder extrem heiße Medien das Messrohr durchströmen.

Ein gattungsgemäßes Coriolis-Massedurchflussmessgerät ist aus der DE 195 37 880 A1 bekannt. Aus dem Beitrag "Recommended Practices for Flowmeter Use and Calibration", Trigas, vom 1. Dezember 2008 (http://www.trigasfi.de/pdf/CalFreqpaperEnglish.pdf) ist bekannt, dass Durchflussmessgeräte zu einem zeitlichen Drift der Messergebnisse neigen und daher gelegentlich eine Neukalibrierung erforderlich sein kann.

Es ist daher die Aufgabe der vorliegenden Erfindung, die aufgezeigten Nachteile bei bekannten Verfahren zum Betreiben eines Coriolis-Massedurchfußmessgeräts bzw. bei bekannten Massedurchflussmessgeräten - zumindest teilweise - zu vermeiden, insbesondere die Temperaturabhängigkeit der Genauigkeit von Massedurchflussmessgeräten auch bei großen Temperaturunterschieden zu verbessern.

Die aufgezeigte Aufgabe ist erfindungsgemäß zunächst und im Wesentlichen bei dem in Rede stehenden Verfahren zum Betreiben eines nach dem Coriolis-Prinzip arbeitenden Massedurchflussmessgeräts gelöst mit den Merkmalen des Kennzeichnungsteils von Patentanspruch 1.

Insgesamt hat das bekannte Verfahren die Eigenschaft, dass in der Rechenvorschrift wenigstens eine den Massedurchfluss beeinflussende bekannte theoretische oder empirische Material-Temperaturabhängigkeit $K_T$ berücksichtigt wird, dass durch einen nachfolgenden Kalibrierprozess unter Berücksichtigung der den Massedurchfluss beeinflussenden bekannten theoretischen oder empirischen Material-Temperaturabhängigkeit $K_T$ eine den Massedurchfluss beeinflussende gerätespezifische Temperaturabhängigkeit e des Massedurchflussmessgeräts bestimmt wird, und dass in der Rechenvorschrift zur Bestimmung des Massedurchflusses sowohl die bekannte theoretische oder empirische Material-Temperaturabhängigkeit $K_T$ als auch die gerätespezifische Temperaturabhängigkeit e berücksichtigt wird.

Durch das Verfahren ist es möglich, verschiedene Temperatureinflussfaktoren voneinander zu unterscheiden, indem zunächst eine den Massedurchfluss beeinflussende bekannte theoretische oder empirische Material-Temperaturabhängigkeit $K_T$ zugrunde gelegt wird. Eine theoretische Material-Temperaturabhängigkeit ist also üblicherweise ein formelmäßiger temperaturmäßiger physikalischer Zusammenhang, und eine empirische Material-Temperaturabhängigkeit wird üblicherweise gewonnen durch Ausmessen einer Vielzahl gleichartiger Massedurchflussmessgeräte, so dass es sich weder bei der theoretischen noch bei der empirischen Material-Temperaturabhängigkeit $K_T$ um eine nur das individuelle Gerät beschreibende Größe handelt.

Die nachfolgend im Kalibrierprozess bestimmte gerätespezifische Temperaturabhängigkeit e betrifft nur das individuelle, dem Kalibrierprozess unterzogene Massedurchflussmessgerät. Wenn davon die Rede ist, dass "unter Berücksichtigung der den Massedurchfluss beeinflussenden bekannten theoretischen oder empirischen Material-Temperaturabhängigkeit $K_T$" die gerätespezifische Temperaturabhängigkeit bestimmt wird, dann ist damit gemeint, dass die bekannte theoretische oder empirische Material-Temperaturabhängigkeit $K_T$ nicht in die gerätespezifische Temperaturabhängigkeit e eingeht, vielmehr aus dieser ganz bewusst herausgerechnet wird. Dadurch werden gegenüber anderen Verfahren wertvolle, aussagekräftige Informationen über das individuelle, gerätespezifische Verhalten des betrachteten Massedurchflussmessgeräts gewonnen.

Zur Bestimmung des Massedurchflusses wird schließlich in der Rechenvorschrift zur Bestimmung des Massedurchflusses sowohl die bekannte theoretische oder empirische Material-Temperaturabhängigkeit $K_T$ als auch die gerätespezifische Temperaturabhängigkeit e berücksichtigt, um alle relevanten temperaturabhängigen Beiträge zum Massedurchfluss berücksichtigt zu haben.

Durch dieses Vorgehen ist es überhaupt möglich, einen geräteindividuellen Temperatureinfluss e benennen zu können, was beispielsweise dann nicht möglich ist, wenn die Kalibrierung eines Massedurchflussmessgeräts ausschließlich auf Messdaten gestützt wird und keine modellhafte Vorstellung von der erwarteten Temperaturabhängigkeit als theoretisches oder empirisches a-priori-Wissen verwendet wird. Bei einer nur auf Messdaten gestützten Kalibrierung überlagern sich alle temperaturabhängigen Einflussfaktoren undifferenziert, die in den Massedurchfluss eingehen, und sind beispielsweise durch eine Messung unter Berücksichtigung von Anregungs- und Auslenkungssignalen des Messrohres grundsätzlich nicht unterscheidbar.

Gemäß einer besonders bevorzugten Ausgestaltung des erfindungsgemäßen Verfahrens ist vorgesehen, dass die beim Einrichten und/oder im Betrieb des Massedurchflussmessgeräts ermittelte gerätespezifische Temperaturabhängigkeit e zur Geräte- oder Fertigungsdiagnose herangezogen wird. Dazu kann beispielsweise bei der werkseitigen Einrichtung des Massedurchflussmessgeräts darauf geachtet werden, dass eine bestimmte Abweichung des durch die gerätespezifische Temperaturabhängigkeit bewirkten Beitrages zum Massedurchfluss nicht überschritten wird, genauso kann aber auch ein Kalibrierprozess vom Anwender gefahren werden, um auch alle Parameter der Einbausituation zu berücksichtigen.

Besonders vorteilhaft ist es, wenn die gerätespezifische Temperaturabhängigkeit e in bestimmten zeitlichen Abständen bei dem Massedurchflussmessgerät bestimmt wird, weil dann die Möglichkeit geschaffen wird, eine aktuell ermittelte gerätespezifische Temperaturabhängigkeit e mit wenigstens einer vergangenen ermittelten gerätespezifischen Temperaturabhängigkeit e vergleichen zu können, womit also auch schleichende Veränderungen im Massedurchflussmessgerät bzw. in der gesamten Einbausituation des Massedurchflussmessgeräts erkannt werden können.

Bei dem erfindungsgemäßen Verfahrens ist vorgesehen, dass die theoretische oder empirische Material-Temperaturabhängigkeit $K_T$ und/oder die gerätespezifische Temperaturabhängigkeit e jeweils in Form eines linearen Zusammenhangs bestimmt werden. Es ergibt sich der jeweilige Beitrag zum Massedurchfluss durch einfache Multiplikation einer Konstanten mit einer relevanten Temperaturdifferenz $\Delta T$, wie in Gleichung 3 aufgezeigt:

$$\dot{m} = K_R \big[ 1 + \big( K_T \cdot \Delta T_1 + e \cdot \Delta T_2 \big) \big] t_d \qquad (3)$$

Die dargestellte Variante mit zwei verschiedenen relevanten Temperaturdifferenzen $\Delta T_1$ und $\Delta T_2$ verdeutlicht, dass die theoretische oder empirische Material-Temperaturabhängigkeit $K_T$ und/oder die gerätespezifische Temperaturabhängigkeit e unabhängig voneinander in unterschiedlichen Messsituationen, bei unterschiedlichen Referenztemperaturen ermittelt worden sein können.

Gemäß einer weiteren bevorzugten Ausgestaltung des Verfahrens geht in die bekannte theoretische oder empirische Material-Temperaturabhängigkeit $K_T$ die Temperaturabhängigkeit wenigstens eines Elastizitätsmoduls E eines verwendeten Materials ein, insbesondere nämlich die Temperaturabhängigkeit des Elastizitätsmoduls E des Rohrmaterials. Dieser Zusammenhang bietet sich deshalb an berücksichtigt zu werden, weil einerseits der Einfluss des Elastizitätsmoduls E des Rohrmaterials im Rahmen der Coriolis-Massedurchflussmessung bekannt ist (siehe Gleichung 2), andererseits weil die Elastizitätsmodule und auch deren Temperaturabhängigkeit für viele Materialien bekannt sind und deshalb im Rahmen einer theoretischen Material-Temperaturabhängigkeit $K_T$ vergleichsweise einfach verwendet werden können.

Des Weiteren ist gemäß einer besonders bevorzugten Ausgestaltung des Verfahrens vorgesehen, dass in die bekannte theoretische oder empirische Material-Temperaturabhängigkeit $K_T$ wenigstens ein thermischer Längenausdehnungskoeffizient $\alpha$ eingeht, insbesondere nämlich der Längenausdehnungskoeffizient des Rohrmaterials. Es hat sich weiterhin als vorteilhaft herausgestellt, wenn die Temperaturabhängigkeit des thermischen Längenausdehnungskoeffizienten $\alpha(T)$ selbst berücksichtigt wird, was insbesondere bei Messungen in ausgedehnten Temperaturbereichen von Bedeutung ist.

$$\dot{m} \approx K_R \big[ 1 + \big( K_T(E, \alpha) + e(E, \alpha) \big) \Delta T \big] t_d \qquad (4)$$
$$\dot{m} \approx K_R \big[ 1 + \big( K_T(E, \alpha, \Delta T) + e(E, \alpha, \Delta T) \big) \big] t_d$$

Nach einer bevorzugten Ausgestaltung des Verfahrens ist vorgesehen, dass in der Rechenvorschrift zur Bestimmung des Massedurchflusses wenigstens eine mechanische Rohrspannungsabhängigkeit berücksichtigt wird, die entsprechende mechanische Rohrspannung $(\sigma, \tau)$ am Messrohr ermittelt wird, und die gemessene mechanische Rohrspannung zur Berechnung des Durchflusswertes in der Rechenvorschrift verwendet wird.

$$\dot{m} \approx K_R \big[ 1 + \big( K_1 + e \big) \Delta T + f(\sigma, \tau) \big] t_d$$
$$\dot{m} \approx K_R \big[ 1 + \big( K_T + e \big) \Delta T + f(\sigma(T), \tau(T)) \big] t_d \qquad (5)$$

Bevorzugt werden bzw. wird als mechanische Rohrspannung die Umfangsspannung $(\sigma)$ und/oder die axiale Spannung $(\tau)$ des Messrohres ermittelt. Dies geschieht insbesondere unter Einsatz von Dehnungsmessstreifen, die - bevorzugt in Umfangsrichtung und Achsrichtung - auf das Messrohr aufgebracht werden. Die vorhandene Temperaturinformation wird dazu verwendet, um bei den erfassten Längenänderungen - in Umfangs- und/oder Achsrichtung - thermische Dehnungseffekte von unter Kraftwirkung verursachten Dehnungseffekten unterscheiden zu können, da letztere im Wesentlichen die Spannungsinformation tragen. Bevorzugt wird die vorhandene Temperaturinformation auch dazu genutzt, um die Temperaturabhängigkeit der von den Dehnungsmessstreifen erhaltenen Widerstandsinformationen zu kompensieren.

Eine weitere bevorzugte Ausgestaltung des Verfahrens ist dadurch gekennzeichnet, dass die mechanische Rohrspannungsabhängigkeit des Massedurchflusses jeweils in Form eines linearen Zusammenhangs berücksichtigt wird, insbesondere wobei sich der jeweilige Beitrag zum Massedurchfluss durch Multiplikation einer Konstanten mit einer relevanten mechanischen Spannungsdifferenz ($\Delta\sigma$, $\Delta\tau$) ergibt:

$$\dot{m} \approx K_R \big[1 + (K_T + e)\Delta T + c_1 \cdot \Delta\sigma + c_2 \cdot \Delta\tau \big] t_d \qquad (6)$$

Bei einer besonders gut anpassbaren Variante des Verfahrens ist vorgesehen, dass zur Berücksichtigung einer weiteren Temperaturabhängigkeit in die Rechenvorschrift ein weiterer funktionaler Temperaturzusammenhang aufgenommen wird, diesmal in Kombination mit dem die mechanische Spannung berücksichtigenden Term:

$$\dot{m} \approx K_R \big[1 + (K_T + e)\Delta T + f(\sigma, \alpha, \Delta T) \big] t_d \qquad (7)$$

Als besonders praktikabel hat sich erwiesen, wenn ein Polynom zweiten Grades in einer relevanten Temperaturdifferenz ($\Delta T$) herangezogen wird, um die zuvor erwähnte weitere Temperaturabhängigkeit zu berücksichtigen, insbesondere weil die Anzahl der Messungen zur Bestimmung der Parameter hier noch überschaubar ist:

$$\dot{m} \approx K_R \big[1 + (K_T + e)\Delta T + c_1 \cdot \Delta\sigma + c_2 \cdot \Delta\alpha + c_3 \cdot \Delta T + c_4 \cdot \Delta T^2 \big] t_d \, . \qquad (8)$$

Das beschrieben Verfahren ist auch einsetzbar in Zusammenhang mit der Dichtemessung, insbesondere der Dichtemessung mit Hilfe eines Coriolis-Massedurchflussmessgeräts, wobei die interessierenden Messwerte keine Massedurchflüsse sondern Dichten sind.

## Patentansprüche

1. Verfahren zum Einrichten und Betreiben eines nach dem Coriolis-Prinzip arbeitenden Massedurchflussmessgeräts mit einem Messrohr, wobei das Messrohr zu einer Schwingung angeregt wird, eine von dem Massendurchfluss des Messrohrs abhängige Phasenverschiebung der Schwingung des Messrohrs bzw. eine damit korrespondierende Zeitdifferenz ($t_d$) ermittelt wird, die Temperatur (T) des Messrohrs ermittelt wird und mit der ermittelten Zeitdifferenz ($t_d$) und der ermittelten Temperatur (T) mittels einer Rechenvorschrift der korrespondierende Massedurchfluss berechnet wird,
wobei in der Rechenvorschrift wenigstens eine den Massedurchfluss beeinflussende bekannte theoretische oder empirische Material-Temperaturabhängigkeit ($K_T$) berücksichtigt wird,
wobei durch einen Kalibrierprozess unter Berücksichtigung der den Massedurchfluss beeinflussenden bekannten theoretischen oder empirischen Material-Temperaturabhängigkeit ($K_T$) eine den Massedurchfluss beeinflussende geräteindividuelle Temperaturabhängigkeit (e) des Massedurchflussmessgeräts bestimmt wird und
wobei in der Rechenvorschrift zur Bestimmung des Massedurchflusses sowohl die bekannte theoretische oder empirische Material-Temperaturabhängigkeit ($K_T$) als auch die geräteindividuelle Temperaturabhängigkeit (e) berücksichtigt werden,
**dadurch gekennzeichnet,**
**dass** die theoretische oder empirische Material-Temperaturabhängigkeit $K_T$ und/oder die geräteindividuelle Temperaturabhängigkeit e jeweils in Form eines linearen Zusammenhangs bestimmt werden und dass der jeweilige Beitrag zum Massendurchfluss sich gemäß

$$\dot{m} = K_R \big[1 + (K_T \cdot \Delta T_1 + e \cdot \Delta T_2)\big] t_d \, ,$$

ergibt, mit zwei verschiedenen relevanten Temperaturdifferenzen $\Delta T_1$ und $\Delta T_2$, sodass die theoretische oder empirische Material-Temperaturabhängigkeit $K_T$ und die geräteindividuelle Temperaturabhängigkeit e unabhängig voneinander in unterschiedlichen Messsituationen, bei unterschiedlichen Referenztemperaturen ermittelt werden können.

2. Verfahren nach Anspruch 1, **dadurch gekennzeichnet, dass** die beim Einrichten und/oder im Betrieb des Massedurchflussmessgeräts ermittelte geräteindividuelle Temperaturabhängigkeit zur Geräte- oder Fertigungsdiagnose herangezogen wird, wobei eine aktuell ermittelte geräteindividuelle Temperaturabhängigkeit (e) mit wenigstens einer vergangenen ermittelten geräteindividuellen Temperaturabhängigkeiten verglichen wird.

3. Verfahren nach Anspruch 1 oder 2, **dadurch gekennzeichnet, dass** die Temperaturabhängigkeit des Längenausdehnungskoeffizienten ($\alpha(T)$) selbst berücksichtigt wird.

4. Verfahren nach einem der Ansprüche 1 bis 3, **dadurch gekennzeichnet, dass** in der Rechenvorschrift zur Bestimmung des Massedurchflusses wenigstens eine mechanische Rohrspannungsabhängigkeit berücksichtigt wird, die entsprechende mechanische Rohrspannung ($\sigma$, $\tau$) am Messrohr ermittelt wird, und die gemessene mechanische Rohrspannung zur Berechnung des Durchflusswertes in der Rechenvorschrift verwendet wird.

5. Verfahren nach Anspruch 4, **dadurch gekennzeichnet, dass** als mechanische Rohrspannung die Umfangsspannung ($\sigma$) und/oder die axiale Spannung ($\tau$) des Messrohres ermittelt wird bzw. werden.

6. Verfahren nach Anspruch 4 oder 5, **dadurch gekennzeichnet, dass** die mechanische Rohrspannungsabhängigkeit des Massedurchflusses jeweils in Form eines linearen Zusammenhangs bestimmt wird, insbesondere wobei sich der jeweilige Beitrag zum Massedurchfluss durch Multiplikation einer Konstanten ($c_1$, $c_2$) mit einer relevanten mechanischen Spannungsdifferenz ($\Delta\sigma$, $\Delta\tau$) ergibt.

7. Verfahren nach einem der Ansprüche 4 bis 6, **dadurch gekennzeichnet, dass** zur Berücksichtigung einer weiteren Temperaturabhängigkeit in der Rechenvorschrift ein Polynom zweiten Grades in einer relevanten Temperaturdifferenz ($\Delta T$) berücksichtigt wird.

**Claims**

1. Method for setup and operation of a mass flowmeter operating according to the Coriolis principle with a measuring tube, wherein the measuring tube is excited to oscillation, a phase shift of the oscillation of the measuring tube or, respectively, a corresponding time difference ($t_d$) dependent on the mass flow of the measuring tube is determined, the temperature (T) of the measuring tube is determined and the corresponding mass flow is calculated using the determined time difference ($t_d$) and the determined temperature (T) by means of a calculation rule,
wherein at least one known theoretical or empirical material temperature dependence ($K_T$) influencing the mass flow is taken into account in the calculation rule,
wherein a device-specific temperature dependence (e) of the mass flowmeter influencing the mass flow is determined by a calibration process taking into account the known theoretical or empirical material-temperature dependence ($K_T$) influencing the mass flow, and
wherein both the known theoretical or empirical material temperature dependence ($K_T$) and the device-specific temperature dependence (e) are taken into account in the calculation rule for determining the mass flow rate,
**characterized in
that** the theoretical or empirical material-temperature dependence $K_T$ and/or the device-specific temperature dependence e are each determined in the form of a linear relationship, and that the respective contribution to the mass flow rate is determined in accordance with

$$\dot{m} = K_R \left[ 1 + \left( K_T \cdot \Delta T_1 + e \cdot \Delta T_2 \right) \right] t_d$$

with two different relevant temperature differences $\Delta T_1$ and $\Delta T_2$, so that the theoretical or empirical material-temperature dependence $K_T$ and the device-specific temperature dependence e can be determined independently of one another in different measuring situations at different reference temperatures.

**2.** Method according to claim 1, **characterized in that** the device-specific temperature dependence determined during setup and/or operation of the mass flowmeter is/are used for the diagnosis of the device or production, wherein a currently-determined, device-specific temperature dependence (e) is compared with at least one past temperature dependence determined for the device.

**3.** Method according to claim 1 or 2, **characterized in that** the temperature dependence of the coefficient of linear expansion ($\alpha(T)$) itself is taken into account.

**4.** Method according to one of claims 1 to 3, **characterized in that** at least one mechanical tube stress dependence is taken into account in the calculation rule for determining the mass flow, wherein the corresponding mechanical tube stress ($\sigma$, $\tau$) on the measuring tube is determined, and the measured mechanical tube stress is used for calculating the flow value in the calculation rule.

**5.** Method according to claim 4, **characterized in that** the circumferential stress ($\sigma$) and/or the axial stress ($\tau$) of the measuring tube is or are determined as the mechanical tube stress.

**6.** Method according to claim 4 or 5, **characterized in that** the mechanical tube stress dependence of the mass flow is determined in each case in the form of a linear relationship, in particular wherein the respective contribution to the mass flow is obtained by multiplying a constant ($c_1$, $c_2$) by a relevant mechanical stress difference ($\Delta\sigma$, $\Delta\tau$).

**7.** Method according to any one of claims 4 to 6, **characterized in that** a second degree polynomial in a relevant temperature difference ($\Delta T$) is taken into account in the calculation rule in order to take into account a further temperature dependence.

## Revendications

**1.** Procédé de réglage et de fonctionnement d'un débitmètre massique, fonctionnant selon le principe de Coriolis, qui comprend un tube de mesure, le tube de mesure étant excité de manière à osciller, un déphasage de l'oscillation du tube de mesure, lequel déphasage est fonction du débit massique du tube de mesure, ou une différence temporelle ($t_d$) correspondant à ce déphasage étant déterminé, la température (T) du tube de mesure étant déterminée et le débit massique correspondant étant calculé avec la différence de temps ($t_d$) déterminée et la température (T) déterminée au moyen d'une règle de calcul,
au moins une dépendance à la température de matériau ($K_T$) théorique ou empirique connue, qui influe sur le débit massique, étant prise en compte dans la règle de calcul,
une dépendance (e) du débitmètre massique à la température, spécifique au débitmètre et influant sur le débit massique, étant déterminée par un processus d'étalonnage avec prise en compte la dépendance à la température de matériau ($K_T$) théorique ou empirique connue qui influe sur le débit massique, et
la dépendance à la température de matériau ($K_T$) théorique ou empirique connue et la dépendance à la température (e) spécifique du débitmètre étant prise en compte dans la règle de calcul pour déterminer le débit massique,
**caractérisé en ce que**
la dépendance à la température de matériau ($K_T$) théorique ou empirique et/ou la dépendance à la température (e) spécifique au débitmètre sont déterminées chacune sous la forme d'une relation linéaire et **en ce que** la contribution respective au débit massique est obtenue à partir de

$$\dot{m} = K_R \left[ 1 + \left( K_T \cdot \Delta T_1 + e \cdot \Delta T_2 \right) \right] t_d \,,$$

avec deux différences de température pertinentes différentes, $\Delta T_i$ et $\Delta T_2$, de sorte que la dépendance à la température de matériau $K_T$ théorique ou empirique et la dépendance à la température e spécifique au débitmètre peuvent être déterminées indépendamment l'une de l'autre dans différentes situations de mesure, à différentes températures de référence.

**2.** Procédé selon la revendication 1, **caractérisé en ce que** la dépendance à la température spécifique au débitmètre déterminée lors du réglage et/ou du fonctionnement du débitmètre massique est utilisée pour le diagnostic d'appareil ou de fabrication, une dépendance à la température (e) spécifique au débitmètre actuellement déterminée étant comparée à au moins une dépendance à la température spécifique au débitmètre déterminée précédemment.

**3.** Procédé selon la revendication 1 ou 2, **caractérisé en ce que** la dépendance ($\alpha(T)$) du coefficient de dilatation linéaire à la température lui-même est prise en compte.

**4.** Procédé selon l'une des revendications 1 à 3, **caractérisé en ce qu'**au moins une dépendance à une contrainte mécanique du tube est prise en compte dans la règle de calcul pour déterminer le débit massique, la contrainte mécanique ($\sigma$, $\tau$) correspondante du tube est déterminée au niveau du tube de mesure, et la contrainte mécanique mesurée du tube est utilisée dans la règle de calcul pour calculer la valeur de débit.

**5.** Procédé selon la revendication 4, **caractérisé en ce que** la contrainte périphérique ($\sigma$) et/ou la contrainte axiale ($\tau$) du tube de mesure sont déterminées comme contrainte mécanique du tube.

**6.** Procédé selon la revendication 4 ou 5, **caractérisé en ce que** la dépendance du débit massique à la contrainte mécanique du tube est déterminée à chaque fois sous la forme d'une relation linéaire, en particulier la contribution respective au débit massique étant obtenue par multiplication d'une constante ($c_1$, $c_2$) par une différence de contrainte mécanique pertinente ($\Delta\sigma$, $\Delta\tau$).

**7.** Procédé selon l'une des revendications 4 à 6, **caractérisé en ce que**, pour prendre en compte une autre dépendance à la température dans la règle de calcul, un polynôme du second degré est pris en compte dans une différence de température pertinente ($\Delta T$).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19537880 A1

**In der Beschreibung aufgeführte Nicht-Patentliteratur**

- Recommended Practices for Flowmeter Use and Calibration. *Trigas,* Dezember 2008, vol. 1, http://www.trigasfi.de/pdf/CalFreqpaperEnglish.pdf